# EUROPÄISCHE PATENTSCHRIFT

(11) **EP 0 599 026 B1**
(45) Veröffentlichungstag und Bekanntmachung des Hinweises auf die Patenterteilung: **13.03.1996**
(21) Anmeldenummer: 93115868.7
(22) Anmeldetag: 01.10.1993
(51) Int. Cl.: F16B 13/06

(54) **Spreizanker aus Metall**
Metallic expansion anchor
Dispositif d'ancrage à cheville métallique expansible

(30) Priorität: 26.11.1992 DE 4239763; 20.07.1993 DE 4324244
(43) Veröffentlichungstag der Anmeldung: 01.06.1994
(73) Patentinhaber: fischerwerke Artur Fischer GmbH & Co. KG, D-72178 Waldachtal (DE)
(72) Erfinder: Hengesbach, Wolfgang, Dipl.-Ing. (TH), D-72280 Dornstetten (DE); Köpff, Ralf, D-72293 Glatten (DE); Mayer, Burkhard, Dr.-Ing., D-71083 Herrenberg (DE); Mäder, Eberhard, D-72184 Eutingen (DE); Porlein, Gerhard, D-72178 Waldachtal (DE); Striebich, Jürgen, Dipl.-Ing. (FH), D-72160 Horb (DE)

(56) Entgegenhaltungen:
- EP-A- 0 514 342
- DE-A- 3 601 597
- DE-U- 9 208 198
- US-A- 3 750 526
- US-A- 4 481 702

## Beschreibung

Die Erfindung betrifft einen Spreizanker aus Metall zur Verankerung in einem Bohrloch eines Bauteiles gemäß der Gattung des Anspruches 1.

Ein gattungsgemäßer Spreizanker ist beispielsweise aus der DE-U-9208198 bekannt. Durch Aufdrehen einer Mutter auf den das Bauteil und den zu befestigenden Gegenstand überragenden Gewindeschaft wird der am Schaft angeformte Spreizkonus in die an der Bohrlochwandung sich abstützende Spreizhülse eingezogen. Die Spreizhülse weitet sich dabei auf und verkeilt sich im Bohrloch. Die Abstützung der Spreizhülse im Bohrloch wird durch an der Bohrlochwandung sich verhakende Sperrelemente erreicht, die am hinteren Rand der Spreizhülse angeordnet sind.

Die Aufweitung der Spreizhülse wird durch mehrere, Spreizsegmente bildende Längsschlitze ermöglicht. Die an ihrer Außenfläche glatten Spreizsegmente werden vom Spreizkonus radial nach außen an die Bohrlochwandung gedrückt. Durch die großflächige Anlage und geringe Biegesteifigkeit der Spreizsegmente erfolgt jedoch nur im unmittelbaren Anlagebereich am Spreizkonus eine Aufweitung, so daß nur ein Teil der Länge der Spreizsegmente zur Erzeugung der Verankerungswirkung genutzt wird. Bei dem bekannten Spreizanker wird dieser Nachteil dadurch teilweise wieder ausgeglichen, daß die Spreizhülse eine etwas dickere Wandung aufweist. Allerdings geht dies zu Lasten des Durchmessers des die Spreizhülse aufnehmenden reduzierten Abschnittes, so daß durch die Querschnittsschwächung dieses Abschnittes die Gefahr eines Bolzenbruches besteht. Durch die örtlich hohe und das Freßen begünstigende Flächenpreßung zwischen Spreizkonus und Spreizsegmente wird außerdem das Nachrutschen des Spreizkonusses bei einer nachträglichen Bohrlocherweiterung durch Rißbildung behindert. Dadurch ist der bekannte Spreizanker für eine Verwendung in der Zugzone, in der durch auftretende Zugspannungen im Beton sich Risse bilden können, ungeeignet.

Aus der US-PS-3750526 ist ein weiterer gattungsgemäßer Spreizanker bekannt, dessen Spreizhülse eine durch Kaltumformung reduzierte Wandungsdicke aufweist. Damit werden zwar einige der zuvor beschriebenen Nachteile vermieden, allerdings weisen die Spreizsegmente der Spreizhülse ebenfalls eine geringe Biegesteifigkeit auf. Damit wird auch bei diesem Spreizanker nur im Bereich der unmittelbaren Abstützung der Spreizsegmente auf dem Spreizkonus eine radiale Aufweitung erreicht. Diese nur einen Teil der Länge der Spreizhülse nutzende Aufspreizung bedingt einen Verlust an Haltekraft, der sich insbesondere bei größer ausfallenden Bohrlöchern oder bei einer nachträglichen Bohrlocherweiterung durch Rißbildung besonders stark bemerkbar macht. Damit ist auch dieser bekannte Spreizanker für eine Verwendung in der Zugzone nicht geeignet.

Der Erfindung liegt die Aufgabe zugrunde, einen Spreizanker der gattungsgemäßen Art derart zu verbessern, daß eine sichere Befestigung in der Zugzone eines Betonteils gewährleistet ist.

Die Lösung dieser Aufgabe wird durch die im Anspruch 1 angegebenen Merkmale erreicht. Durch die von der vorderen Stirnkante ausgehenden und über den größten Teil der Länge der Spreizhülse sich erstreckenden Längsschlitze werden Spreizsegmente gebildet, die durch Einziehen des am Schaft angeformten Spreizkonusses aufweitbar sind. Die auf den Spreizsegmenten angeordneten Ausprägungen bewirken eine Versteifung der Spreizsegmente, so daß diese beim Einziehen des Spreizkonusses weniger leicht einbiegen und sich somit stärker in die Bohrlochwandung eindrücken. Durch das damit erreichte höhere Aufspreizmaß ergeben sich zwangsläufig auch höhere Haltewerte. Bei einer Bohrlocherweiterung durch Rißbildung kann der Spreizkonus besser nachrutschen, da durch die höhere Steifigkeit der Spreizsegmente die Flächenpreßung auf den Spreizkonus verringert ist. Gleichzeitig erfolgt eine weitere Aufweitung der Spreizhülse zum Ausgleich der Bohrlocherweiterung.

Die Ausprägungen dienen gleichzeitig als Sperrelemente, um die Spreizhülse im Bohrloch zum Einziehen des Spreizkonusses unverrückbar festzusetzen. Durch die Dreiecksform der Ausprägungen mit zum vorderen Ende der Spreizsegmente weisender Spitze ergeben sich mehrere nacheinander angeordnete und quer zur Auszugsrichtung des Spreizankers wirksame Kanten, die sich beim Aufspreizvorgang in die Bohrlochwandung eingraben. Aufgrund der zum vorderen Ende der Spreizsegmente weisenden Spitze der Ausprägungen läßt sich der Spreizanker problemlos in das vorbereitete Bohrloch einschlagen.

Vorteilhafte und bevorzugte Weiterbildungen sind in den Unteransprüchen angegeben. Eine ausreichende Steifigkeit der Spreizsegmente bei noch vertretbarem Kraftaufwand zum Eintreiben des Spreizankers in das Bohrloch ergeben sich bei vier Ausprägungen pro Spreizsegment, die eine etwa der halben Spreizhülsenlänge entsprechende Gesamtlänge und eine etwa ein Drittel der Breite eines Spreizsegmentes entsprechende maximale Breite aufweisen. Ferner ist es zweckmäßig, wenn die Höhe der Ausprägungen etwa einem Drittel der Wandungsstärke der Spreizhülse entspricht und jede Ausprägung zu ihrer Spitze hin abgeflacht ist.

In einer weiteren vorteilhaften Ausbildung können die Längsseiten der Spreizsegmente mehrere sich gegenüberliegende Einbuchtungen aufweisen. Damit wird die Biegsamkeit der Spreizsegmente im Bereich der Einbuchtungen erhöht, da durch diese Einbuchtungen die Schalenform und Breite der Spreizsegmente an diesen Stellen reduziert wird. Damit sind die durch die Ausprägungen versteiften Spreizsegmente an ein oder zwei Stellen biegsamer gestaltet. Dadurch wird das Aufgleiten der Spreizhülse auf den Spreizkonus erleichtert, so daß sowohl beim Aufspreizen ein geringeres Drehmoment erforderlich ist, als auch das Nachspreizen bei einer Bohrlocherweiterung durch Rißbildung begünstigt wird.

Zur Verbesserung des Reibverhaltens zwischen dem Spreizkonus und der Spreizhülse kann die vordere Innenkante der Spreizhülse eine Fase aufweisen. Ferner können zum gleichen Zweck die vorderen Eckkanten der Spreizsegmente der Spreizhülse mit einer Abrundung versehen sein.

In einer weiteren Ausgestaltung der Erfindung kann das Material der Spreizhülse durch einen Preßarbeitsgang verdichtet sein. Durch die Verdichtung der Spreizhülse ergibt sich eine Gefügeveränderung, die zu einer Steigerung der Streckgrenze führt. Durch die härtere Oberfläche der Hülse einerseits und durch die Glättung der Oberfläche aufgrund des Preßvorganges andererseits ergeben sich günstigere Gleiteigenschaften der Spreizhülse auf dem Spreizkonus des Spreizankers, die sich sowohl beim Aufspreizvorgang als auch beim Nachspreizverhalten positiv auswirken. Die Steigerung der Streckgrenze bewirkt des weiteren, daß die Spreizhülse einen höheren elastischen Verformungsanteil aufweist. Damit wirkt die Spreizhülse als Art Federelement, das bei einer Bohrlocherweiterung, beispielsweise durch Rißbildung, sich weitet und somit das Nachrutschen des Spreizkonusses in die Spreizhülse ermöglicht.

Als weiterer Vorteil des Preßarbeitsganges ergibt sich eine Vergrößerung der gestanzten Blechplatine. Damit werden die Schlitzbreiten nachträglich wieder etwas verkleinert und die Wirkflächen der Spreizsegmente vergrößert. Zum Ausstanzen der Schlitze können somit dickere und damit verschleißfestere Stempel verwendet werden.

Um das Aufbiegen der Spreizhülse auf den reduzierten Abschnitt des Spreizankers zu erleichtern, ist es zweckmäßig, mit dem Ausprägen der Sperrelemente nach dem Preßarbeitsgang die Spreizhülse gleichzeitig U-förmig vorzubiegen.

Die Erfindung wird nachfolgend anhand der Zeichnung näher erläutert.

Es zeigen:
- Figur 1: den erfindungsgemäßen Spreizanker mit aufgesetzter Spreizhülse (gemäß Schnitt B-B),
- Figur 2: den Schnitt A-A des in Figur 1 dargestellten Spreizankers,
- Figur 3: den in einem Bohrloch eines Betonteiles verankerten Spreizanker,
- Figur 4: die Abwicklung der Spreizhülse als Stanz-/Biegeteil,
- Figur 5: die Abwicklung der Spreizhülse nach dem Preßarbeitsgang und
- Figur 6: die auf dem Spreizanker aufgeschobene U-förmig vorgebogene Spreizhülse.

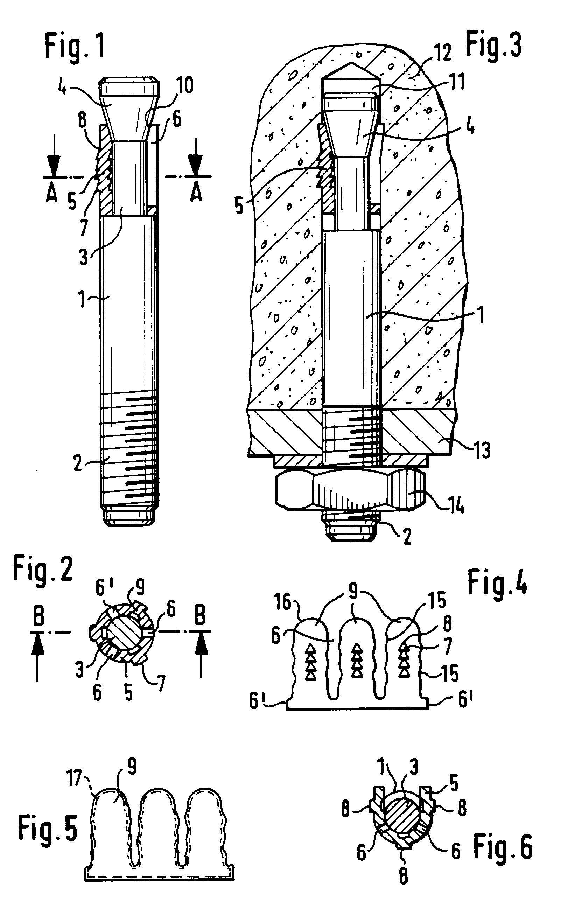

Der in Figur 1 dargestellte Spreizanker besteht aus einem Schaft 1, der an seinem hinteren Ende einen Gewindeabschnitt 2 zum Festspannen eines Gegenstandes aufweist.

Im vorderen Bereich des Schaftes 1 befindet sich ein abgesetzter Abschnitt 3, an den sich zum vorderen Ende hin ein Spreizkonus 4 anschließt. Im Bereich des Abschnitts 3 st eine Spreizhülse 5 aufgesetzt, deren Spreizbereich durch von der vorderen Stirnkante der Hülse ausgehende Längsschlitze 6 gebildet ist. Zum Festsetzen der Spreizhülse im Bohrloch sind an der Spreizhülse 5 Sperrelemente angeordnet, die durch vier zusammenhängende und in Längsrichtung der Spreizsegmente verlaufende Ausprägungen 7 gebildet sind. Die Ausprägungen 7 weisen eine Dreiecksform auf, wobei die Spitze 8 zum vorderen Ende der Spreizsegmente hin gerichtet ist. Gleichzeitig sind die Ausprägungen 7 in Richtung der Spitze 8 abgeflacht, um das Eintreiben des Spreizankers in das Bohrloch zu erleichtern. Die Höhe der Ausprägungen 7 beträgt etwa ein Drittel der Wandungsstärke der Spreizhülse 5. Damit bilden die hinteren Kanten der Ausprägungen 7 Widerhaken, die ein Festsetzen der Spreizhülse 5 im Bohrloch ermöglichen.

In Figur 2 ist der Schnitt entsprechend der Schnittlinie A-A dargestellt. Durch die Längsschlitze 6, 6' entstehen mehrere Spreizsegmente 9, die beim Einziehen des Spreizkonusses 4 in die Spreizhülse 5 zur Verankerung des Spreizankers aufspreizen. Um das Aufgleiten auf den Spreizkonus 4 zu erleichtern, ist die Spreizhülse 5 mit einer Fase 10 versehen.

Figur 3 zeigt einen Spreizanker, der in einem Bohrloch 11 eines Betonteiles 12 verankert ist. Die Verankerung und gleichzeitig die Verspannung des zu befestigenden Gegenstandes 13 erfolgt durch Aufdrehen der Mutter 14 auf den Gewindeabschnitt 2 des Spreizankers. Durch die axiale Verschiebung des Schaftes 1 des Spreizankers wird der Spreizkonus 4 in die durch die Sperrelemente unverrückbar im Bohrloch festsitzende Spreizhülse 5 zu deren Verankerung eingezogen.

Figur 4 zeigt die Abwicklung der aus einem Blech gestanzten Spreizhülse 5 mit drei Spreizsegmenten 9. Jedes Spreizsegment ist mit vier nacheinander angeordneten Ausprägungen 7 versehen, wobei die Ausprägungen eine Dreiecksform mit zum vorderen Ende gerichteten Spitze 8 aufweisen. Die Spreizsegmente 9 sind durch die Längsschlitze 6 bzw. die Rollkante 6' gebildet. Die Längsseiten der Spreizsegmente 9 weisen Einbuchtungen 15 auf, die sich jeweils zur Verringerung der Breite eines Spreizsegmentes 9 gegenüberliegen. Durch Aufbiegen des Stanzteiles auf den reduzierten Abschnitt 3 des Schaftes 1 wird der erfindungsgemäße Spreizanker gebildet. Zur Verringerung der Reibung zwischen Spreizkonus und Spreizhülse sind die Eckkanten der Spreizsegmente 9 mit Abrundungen 16 versehen.

In Figur 5 ist die Stanzplatine der Spreizhülse 5 nach dem Preßarbeitsgang dargestellt. Die gestrichelte Umrißlinie 17 zeigt die Stanzkontur, die durch den Preßarbeitsgang geringfügig auf das in Figur 5 dargestellte Außenmaß vergrößert wird.

Nach dem Preßarbeitsgang werden die Sperrelemente 7 ausgeprägt und gleichzeitig die Spreizhülse 5 U-förmig in der Weise vorgebogen, daß sie auf den reduzierten Abschnitt 3 des Spreizankers 1 seitlich aufschiebbar ist. In einem weiteren Arbeitsgang werden dann die Längskanten der Spreizhülse um den reduzierten Abschnitt 3 umgebogen.

Bei Verwendung von nichtrostendem Stahl für die Spreizhülse kann es zweckmäßig sein, die Spreizhülse zusätzlich zur weiteren Verbesserung der Gleiteigenschaften zu beschichten. Als besonders vorteilhaft hat sich ein Beschichtungsverfahren erwiesen, bei dem eine Mischung aus Nickel und Teflon chemisch im Tauchverfahren aufgebracht wird.

## Patentansprüche

1. Spreizanker zur Verankerung in einem Bohrloch eines Betonteiles, bestehend aus einem Schaft, der an seinem hinteren Ende Mittel zum Befestigen eines Gegenstandes und an seinem vorderen Ende einen im Querschnitt reduzierten Abschnitt mit einem sich daran anschließenden Spreizkonus aufweist, und einer über den Abschnitt gestülpten Spreizhülse mit Spreizsegmente bildenden Längsschlitzen und den Durchmesser der Spreizhülse überragenden, auf den Spreizsegmenten angeordneten Sperrelementen, **dadurch gekennzeichnet,** daß die Sperrelemente mehrere zusammenhängende und in Längsrichtung der Spreizsegmente (9) verlaufende Ausprägungen (7) sind, die jeweils eine Dreiecksform mit zum vorderen Ende der Spreizsegmente gerichteter Spitze (8) aufweisen.

2. Spreizanker nach Anspruch 1, **dadurch gekennzeichnet,** daß vier Ausprägungen (7) pro Spreizsegment (9) angeordnet sind, die eine etwa der halben Spreizhülsenlänge entsprechende Gesamtlänge und eine etwa ein Drittel der Breite eines Spreizsegmentes (9) entsprechende maximale Breite aufweisen.

3. Spreizanker nach Anspruch 1, **dadurch gekennzeichnet,** daß die Höhe der Ausprägungen (7) etwa einem Drittel der Wandungsstärke der Spreizhülse (5) entspricht und jede Ausprägung zu ihrer Spitze (8) hin abgeflacht ist.

4. Spreizanker nach Anspruch 1, **dadurch gekennzeichnet,** daß die Längsseiten der Spreizsegmente (9) mehrere sich gegenüberliegende Einbuchtungen (15) aufweisen.

5. Spreizanker nach Anspruch 1, **dadurch gekennzeichnet,** daß die vordere Innenkante der Spreizhülse (5) eine Fase (10) aufweist.

6. Spreizanker nach Anspruch 1, **dadurch gekennzeichnet,** daß die vorderen Eckkanten der Spreizsegmente (9) mit einer Abrundung (16) versehen sind.

7. Spreizanker nach Anspruch 1, **dadurch gekennzeichnet,** daß das Material der Spreizhülse (5) durch einen Preßarbeitsgang verdichtet ist.

## Claims

1. An expansible anchor for anchoring in a hole drilled in a concrete part, consisting of a shank, which at its rear end has means for fixing an article and at its front end has a portion of reduced cross-section with an adjoining expander cone, and, positioned over the portion, an expansible sleeve having longitudinal slits creating expansible segments, and locking elements extending beyond the diameter of the expansible sleeve and arranged on the expansible segments, characterized in that the locking elements comprise several interconnected punchings (7) extending in the longitudinal direction of the expansible segments (9), each punching being of triangular form with a tip (8) directed towards the front end of the expansible segments.

2. An expansible anchor according to claim 1, characterized in that per expansible segment (9) there are four punchings (7), which have an overall length corresponding to approximately half the length of the expansible sleeve and a maximum width corresponding to approximately one third of the width of one expansible segment (9).

3. An expansible anchor according to claim 1, characterized in that the height of the punchings (7) corresponds approximately to a third of the wall thickness of the expansible sleeve (5) and each punching slopes away towards its tip (8).

4. An expansible anchor according to claim 1, characterized in that the longitudinal sides of the expansible segments (9) have several opposing indentations (15).

5. An expansible anchor according to claim 1, characterized in that the front inner edge of the expansible sleeve (5) has a bevel (10).

6. An expansible anchor according to claim 1, characterized in that the front corner edges of the expansible segments (9) are rounded (16).

7. An expansible anchor according to claim 1, characterized in that the material of the expansible sleeve (5) is compacted by a pressing operation.

## Revendications

1. Dispositif d'ancrage expansible pour l'ancrage dans un trou percé d'une pièce de béton, constitué d'une tige qui présente à son extrémité arrière des moyens pour fixer un objet et à son extrémité avant une portion de section réduite avec un cône d'expansion qui s'y raccorde, et d'une douille expansible emboîtée par-dessus cette section et présentant des fentes longitudinales formant des segments expansibles et des éléments de verrouillage dépassant le diamètre de la douille expansible et disposés sur les segments expansibles, **caractérisé** par le fait que les éléments de verrouillage sont plusieurs emboutis solidaires (7), qui sont orientés selon la direction longitudinale des segments expansibles (9) et présentent chacun une forme rectangulaire avec une pointe (8) orientée vers l'extrémité avant des segments expansibles.

2. Dispositif d'ancrage expansible selon la revendication 1. **caractérisé** par le fait que par segment expansible (9) sont disposés quatre emboutis (7) qui présentent une longueur totale correspondant à peu près à la moitié de la longueur de la douille expansible et une largeur maximale correspond à peu près au tiers de la largeur d'un segment expansible (9).

3. Dispositif d'ancrage expansible selon la revendication 1. **caractérisé** par le fait que la hauteur des emboutis (7) correspond à peu près au tiers de l'épaisseur de paroi de la douille expansible (5) et que chaque embouti est chanfreiné en direction de sa pointe (8).

4. Dispositif d'ancrage expansible selon la revendication 1. **caractérisé** par le fait que les côtés longitudinaux des segments expansibles (9) présentent plusieurs dentelures (15) situées les unes en face des autres.

5. Dispositif d'ancrage expansible selon la revendication 1. **caractérisé** par le fait que le bord intérieur avant de la douille expansible (5) présente un chanfrein (10).

6. Dispositif d'ancrage expansible selon la revendication 1. **caractérisé** par le fait que les sommets avant des segments expansibles (9) présentent un arrondi (16).

7. Dispositif d'ancrage expansible selon la revendication 1, **caractérisé** par le fait que le matériau de la douille expansible (5) est comprimé par une étape de travail à la presse.
